# EUROPÄISCHE PATENTSCHRIFT

(11) **EP 2 214 862 B1**
(45) Veröffentlichungstag und Bekanntmachung des Hinweises auf die Patenterteilung: **24.04.2013**
(21) Anmeldenummer: 08875341.3
(22) Anmeldetag: 19.11.2008
(51) Int. Cl.: B23P 11/00, F16D 1/072, F16D 1/08, B21J 5/12, B21J 13/02, H02K 1/28, H02K 15/02

(54) **WELLE-NABE-BAUTEIL SOWIE VERFAHREN ZUR HERSTELLUNG EINES DERARTIGEN BAUTEILS**
SHAFT-HUB COMPONENT AND METHOD FOR PRODUCING SUCH A COMPONENT
ÉLÉMENT STRUCTURAL ARBRE-MOYEU ET PROCÉDÉ DE RÉALISATION D'UN TEL ÉLÉMENT STRUCTURAL

(30) Priorität: 30.11.2007 DE 102007057704; 05.11.2008 DE 102008043488
(43) Veröffentlichungstag der Anmeldung: 11.08.2010
(73) Patentinhaber: Robert Bosch GmbH, 70442 Stuttgart (DE)
(72) Erfinder: BAUMANN, MATTHIAS, 77933 LAHR (DE); KOENINGER, JUERGEN, 77767 APPENWEIER (DE); SCHUSTER, EDUARD, 77839 LICHTENAU-MUCKENSCHOPF (DE); ERNST, EDGAR, 77815 BUEHL (DE); ZINK, ALFRED, 77855 ACHERN (DE); VIERLING, JUERGEN, 67760 GAMBSHEIM (DE)
(86) Internationale Anmeldenummer: PCT/EP2008/065835
(87) Internationale Veröffentlichungsnummer: WO 2010/051861

(56) Entgegenhaltungen:
- AT-B- 291 691
- DE-U1- 8 517 278
- GB-A- 2 029 300
- US-A- 2 397 382

## Beschreibung

### Stand der Technik

Die vorliegende Erfindung betrifft ein Verfahren zur Herstellung eines Welle-Nabe-Bauteils, umfassend eine Welle und ein Nabenbauteil, eine Welle-Nabe-Verbindung für einen Anker einer elektrischen Maschine sowie ein derartiges Welle-Nabe-Bauteil.

Welle-Nabe-Bauteile sind aus dem Stand der Technik in unterschiedlichen Ausgestaltungen bekannt. Beispielsweise wird bei Ankern für elektrische Maschinen ein Nabenbauteil in Form eines Blechpakets auf einer Welle fixiert. Eine gängige Methode ist dabei die Befestigung des Naben-Bauteils auf der Welle mittels Klebstoff, wobei Dosierung und Handhabung des Klebstoffs sehr aufwendig und kostenintensiv ist. Ferner besteht die Gefahr, dass sich die Verbindung aufgrund von Alterungsprozessen löst. Weiterhin ist aus der EP 1157 233 B1 eine Welle-Nabe-Verbindung bekannt, bei der an einer Außenfläche der Welle Deformationsbereiche ausgebildet sind, welche eine kraftschlüssige Verbindung mit dem Nabenbauteil bereitstellen. Das Nabenbauteil ist derart an der Welle angeordnet, dass die Deformationsbereiche der Welle mittig zum Nabenbauteil angeordnet sind. Die Deformationsbereiche an der Welle werden beim Fügevorgang deformiert.

Derartige Welle-Nabe-Bauteile werden bei elektrischen Kleinmotoren mit einer dünnen Welle zwischen 4 und 10 mm verwendet, wobei eine Wellenlänge im Vergleich zum Durchmesser sehr groß ist. Aufgrund der geringen Knickstabilität derartiger Wellen sind die bekannten Fügeverfahren mit Presspassung jedoch problematisch, da insbesondere unzulässige Rundlauffehler entstehen können. Dies führt zu unerwünschtem Nacharbeiten bzw. einem hohen Ausschussanteil. Insbesondere bei einer Stahl-Stahl-Paarung kommt es häufig zum Fressen während des Fügevorgangs.

Mit der GB-A-2029300 ist eine Verbindung zwischen Metall-Teilen und ein Verfahren zur Ausbildung einer solchen bekannt geworden, bei der zuerst eine Welle gehärtet wird, und danach Kerben mit korrespondierenden Aufwürfen in die Oberfläche der Welle eingepresst werden. Bei einer solch durchgehärteten Welle ist es jedoch schwierig deren Oberfläche ausreichend plastisch umzuformen.

### Vorteile der Erfindung

Das erfindungsgemäße Verfahren zum Herstellen eines Bauteils mit einer Welle, einem Nabenbauteil und einer Welle-Nabe-Verbindung mit den Merkmalen des Patentanspruchs 1 weist demgegenüber den Vorteil auf, dass das Bauteil einfach und kostengünstig bereitgestellt werden kann. Dabei weist das derart hergestellte Bauteil eine lange Lebensdauer auf. Durch die hohe Härtedifferenz zwischen der Wellenoberfläche und dem Naben-Bauteil kann insbesondere ein unerwünschtes Fressen des Nabenbauteils auf der Welle beim Fügevorgang bzw. Beschädigungen des Bauteils insbesondere an der Welle vermieden werden. Dies wird erfindungsgemäß dadurch erreicht, dass die Welle in einem ersten Schritt zumindest randschichtgehärtet wird, wobei die Welle an ihrem Außenumfang gehärtet wird. Dabei wird beispielsweise lediglich eine vorbestimmte dünne Randtiefe der Welle gehärtet oder alternativ die Welle über ihren gesamten Querschnitt durchgehärtet. Anschließend wird die gehärtete Welle derart umgeformt, dass ein Teilbereich der Welle derart verformt wird, dass ein Bereich radial über einen ursprünglichen Außenumfang der Welle vorsteht und ein anderer Bereich radial eingedrückt ist. Durch die Härtung der Wellenoberfläche wird eine Verfestigung des Wellenwerkstoffes im dem radial vorstehenden Bereich bzw. der durch diese gebildeten Kerbzähne erzeugt. Mit anderen Worten wird die zumindest randschichtgehärtete Welle derart umgeformt, dass sie in diesem Teilbereich einen unrunden Außenumfang aufweist, so dass vorstehende Verbindungsbereiche für eine Verbindung mit dem Nabenbauteil bereitgestellt werden. Anschließend werden die umgeformte Welle und das Nabenbauteil miteinander gefügt, so dass an dem vorstehenden Bereich der Welle die Welle-Nabe-Verbindung als Presssitz ausgebildet ist. Dabei ist eine Härte des Nabenbauteils geringer als eine Härte der Welle.

Gemäß der vorliegenden Erfindung ist eine Dicke der gehärteten Randschicht in einem Bereich zwischen 0,01 mm und 4 mm, insbesondere zwischen 0,2 mm und 1 mm, wobei insbesondere ein Durchmesser der Welle zwischen 4 mm und 8 mm liegt. Hierdurch wird sichergestellt, dass der Randbereich einerseits eine ausreichende Härte gegenüber Verschleiß oder "Fressen" aufweist und trotzdem eine einfache und kostengünstige Umformung der randschichtgehärteten Welle möglich ist. Besonders bevorzugt beträgt eine Dicke der gehärteten Randschicht zwischen 2,5 und 5 % des Durchmessers der Welle. Eine Länge der Welle liegt vorzugsweise zwischen 120 und 160 mm. Vorzugsweise beträgt ein Verhältnis des Wellendurchmessers zur Wellenlänge 10 bis 40, besonders bevorzugt 20 bis 30.

Die Unteransprüche zeigen bevorzugte Weiterbildungen der Erfindung.

Beispielsweise kann die gesamte Welle gehärtet werden und es wird vermieden, dass lediglich Teilbereiche (des Außenmantels) der Welle, wie beispielsweise Lagerbereiche, gehärtet werden, was sehr aufwendig und zeitintensiv ist. Bevorzugt kann die Welle als Ganzes (deren gesamter Außenmantel) gehärtet werden und anschließend wird ein Umformen der gehärteten Welle ausgeführt. Das Härten der Welle kann dabei lediglich in einem dünnen Randbereich des Außenumfangs ausgeführt werden, so dass der innere Kern der Welle ungehärtet verbleibt. Dadurch kann ein Umformen der gehärteten Welle mit akzeptablen Kräften ausgeführt werden, so dass eine Deformation der Welle derart erfolgt, dass ein oder mehrere Bereiche der Welle über den ursprünglichen Außendurchmesser der Welle vorstehen. Insbesondere kann die Standzeit der Kerbwerkzeuge erhöht werden, wenn ausschließliche die äußere Randschicht der Welle gehärtet ist.

Vorzugsweise ist eine Länge in Axialrichtung der Welle des umgeformten Teilbereichs derart, dass diese Länge einer axialen Länge des Nabenbauteils entspricht. Dadurch wird sichergestellt, dass der umgeformte Teilbereich der Welle eine Breite aufweist, welche einer Breite des Nabenbauteils entspricht, so dass eine sichere Fixierung des Nabenbauteils an der Welle erreicht wird. Alternativ kann der Umformbereich aber auch kürzer oder länger als die axiale Länge des Naben-Bauteils ausgebildet werden.

Weiter bevorzugt wird der Schritt des Umformens der zumindest randschichtgehärteten Welle mittels eines Zylinderabschnitts bzw. einem Zylinder ausgeführt. Dadurch werden an der Welle teilzylinderförmige Eindellungen ausgebildet, und der vorstehende Bereich an der Welle ist entsprechend einem Wall gebildet. Dieser Wall weist dabei eine symmetrische Gestalt auf und kann einfach und schnell erzeugt werden. Als Werkzeug kann hierzu beispielsweise ein Stempel mit einem zylinderförmigen oder halbzylinderförmigen Hartmetalleinsatz verwendet werden, dessen Mantelfläche radial in die Welle eingedrückt wird.

In einer weiteren Ausführung können auch Stempel mit einer ebenen Fläche radial gegen die Welle gepresst werden, wodurch der Außenumfang der Welle näherungsweise beispielsweise einen Polygonzug mit abgerundeten Ecken bildet. Dabei werden zwischen den ebenen Eindruckflächen Materialwälle aufgeworfen, die dann den Kraft- und/oder Formschluss mit dem Naben-Bauteil bilden. Bei diesem Stempelverfahren können relativ hohe Kräfte auf die Welle ausgeübt werden, ohne das Stempelwerkzeug zu verschleißen. Daher ist dieses Verfahren insbesondere auch für die durchgehärtete Welle mit einer großen Härtedifferenz geeignet.

Wird hingegen ein Stempelwerkzeug mit einer relativ dünnen Spitze verwendet, eignet sich dieses für Wellen, die einen geringere Härtedifferenz m Naben-Bauteil aufweisen. Dies ist beispielsweise beim Randschichthärten der Fall, bei dem nur eine geringe Tiefe ausgehend vom Außenmantel gehärtet wird und dadurch die Härtedifferenz gewöhnlich geringer ausgebildet ist. Hierbei kann das Kerbwerkzeug als längliche spitze Kerbleiste (Kanten) oder eine punktförmige oder ovale Spitze aufweisen.

Gemäß einer weiteren bevorzugten Ausgestaltung der vorliegenden Erfindung ist bei Vorhandensein von mehreren umgeformten Teilbereichen an der Welle ein Herstellen der Teilbereiche derart ausgeführt, dass die Teilbereiche synchron - also zeitgleich - gebildet werden. Dies hat den Vorteil, dass eine gleichmäßige Verformung an allen umgeformten Teilbereichen der Welle erfolgt und in einem Schritt mehrere vorstehende Bereiche an der Welle erzeugt werden können. Ferner können dadurch Reibungseinflüsse während des Umformens reduziert werden.

Weiter bevorzugt wird das Umformen der gehärteten Welle an genau zwei einander gegenüberliegenden Bereichen der Welle ausgeführt, so dass zwei einander gegenüberliegende vorstehende Bereiche an der Welle gebildet werden. Hierdurch wird insbesondere eine Unwucht an der Welle vermieden. Alternativ wird das Umformen an der Welle an genau drei Positionen der Welle ausgeführt, wobei die drei Positionen jeweils in einem Winkel von 120° am Umfang der Welle voneinander beabstandet angeordnet sind. Hierdurch wird insbesondere eine automatische Zentrierwirkung beim Aufschieben des Nabenbauteils auf die umgeformte Welle erreicht. Ferner weist auch diese Welle keine Unwucht aufgrund der Umformungen auf. Ebenso kann die Umformung an vier Stellen erfolgen, wobei diese vorzugsweise gleichmäßig über den Umfang angeordnet sind (ca. 4 x 90° Abstand). Die Umformungen können dabei besonders einfach mit vier etwa parallelen Kerbleisten angeformt werden, von denen jeweils ein Paar gegen das andere Paar gepresst wird.

Vorzugsweise sind in Längsrichtung der Welle mehrere umgeformte, radial vorstehende Teilbereiche ausgebildet, so dass an einer Welle mehrere Nabenbauteile fixiert werden können. Dadurch können beispielsweise an einer Ankerwelle für eine elektrische Maschine neben dem Anker ein Kugellager oder ein Ringmagnet oder weitere Bauteile. angeordnet werden.

Weiter betrifft die vorliegende Erfindung ein Welle-Nabe-Bauteil für einen Anker einer elektrischen Maschine, umfassend eine Welle und ein Nabenbauteil, wobei die Welle eine gehärtete dünne Randschicht am gesamten Außenumfang aufweist und die Welle wenigstens einen nach dem Härten erzeugten Teilbereich umfasst, welcher eine Verformung über einen ursprünglichen Außenumfang der Welle aufweist. Die Verbindung zwischen Welle und Nabenbauteil ist dabei ein Presssitz an dem radial vorstehenden Bereich und eine Härte des Nabenbauteils ist geringer als eine Härte der Welle. Dadurch kann ein Welle-Nabe-Bauteil für einen Anker einer elektrischen Maschine bereitgestellt werden, welcher insbesondere keine Risse oder einen untolerierbaren Verzug nach dem Fügevorgang des Nabenbauteils auf die Welle aufweist. Das erfindungsgemäße Welle-Nabe-Bauteil kann einfach und kostengünstig hergestellt werden. Insbesondere kann als Anker auch ein Blechlamellenpaket verwendet werden, welches aus einer Vielzahl von einzelnen Blechlamellen besteht, ohne dass dabei Beschädigungen während des Fügevorgangs an der Welle oder den Blechen auftreten.

Das Nabenbauteil des Welle-Nabe-Bauteils ist vorzugsweise ein Blechlamellenpaket aus einer Vielzahl von Einzelblechen oder ein Kugellager oder ein Ringmagnet oder eine Lagerhülse oder ein Abtriebszahnrad.

Besonders bevorzugt ist dabei eine Länge des umgeformten Bereichs der Welle in Axialrichtung der Welle gleich einer Breite des dort zu fixierenden Nabenbauteils. Dadurch kann ein sicherer Halt des Nabenbauteils auf der Welle realisiert werden.

Die vorliegende Erfindung betrifft ferner eine elektrische Maschine mit einem Welle-Nabe-Bauteil mit einer gehärteten Welle und einem Nabenbauteil mit geringerer Härte als die Welle, wobei bei der Welle insbesondere nur eine dünne Randschicht gehärtet wurde und nach dem Härten eine Verformung der Welle derart erfolgt, dass ein Presssitz zwischen einem vorstehenden Bereich der Welle und dem Nabenbauteil beim Fügen erreichbar ist.

Die vorliegende Erfindung ist auch bei anderen Welle-Nabe-Bauteilen, wie z.B. Kommutatoren oder Schneckenrädern, verwendbar.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Ansicht eines Welle-Nabe-Bauteils gemäß einem ersten Ausführungsbeispiel der vorliegenden Erfindung,
- Figur 2: eine schematische Seitenansicht der Welle von Figur 1,
- Figur 3: eine Schnittansicht entlang der Linie III-III von Fig. 2,
- Figur 4: eine schematische Schnittansicht, welche den Schritt des Umformens der Welle verdeutlicht, und
- Figur 5 und 6: schematische Schnittansichten einer Welle eines Welle-Nabe-Bauteils gemäß weiterer Ausführungsbeispiele der Erfindung,
- Figur 7 und 8: schematische Schnittansichten einer Welle mit verschiedenen Stempelwerkzeugen gemäß der erfindungsgemäßen Ausführungsbeispiele.

### Ausführungsformen der Erfindung

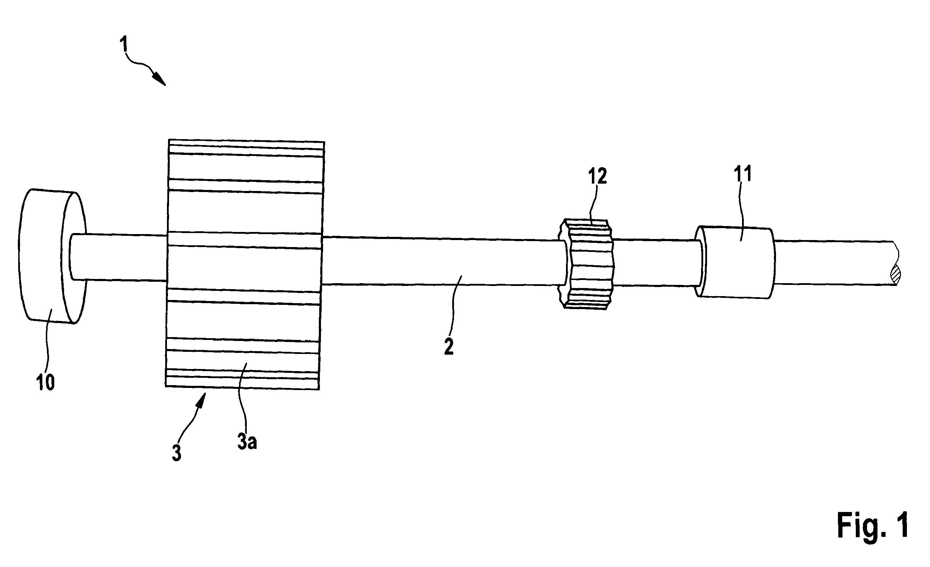

Nachfolgend wird unter Bezugnahme auf Figuren 1 bis 4 ein Welle-Nabe-Bauteil 1 gemäß einem ersten Ausführungsbeispiel der. Erfindung im Detail beschrieben.

Figur 1 zeigt eine Seitenansicht des Welle-Nabe-Bauteils 1, welches eine Welle 2 und ein daran befestigtes Blechpaket 3 umfasst. Das Blechpaket 3 ist aus einer Vielzahl von einzelnen Blechen 3a hergestellt. An der Welle 2 sind ferner weitere Nabenbauteile in Form eines Lagerrings 10, einer Lagerhülse 11 sowie eine Abtriebszahnrads 12 angeordnet. Alle sogenannten Nabenbauteile, d.h. auch das Blechpaket 3, sind dabei mittels einer Presspassung mit der Welle 2 verbunden. Die Passungsgrößen der jeweiligen Welle-Nabe-Verbindung sind dabei derart gewählt, dass die inneren Nabenbauteile, d.h., das Blechpaket 3 und das Abtriebszahnrad 12, problemlos über die Passungsbereiche der äußeren Nabenbauteile, d.h., des Lagerrings 10 und der Lagerhülse 11 geschoben werden können.

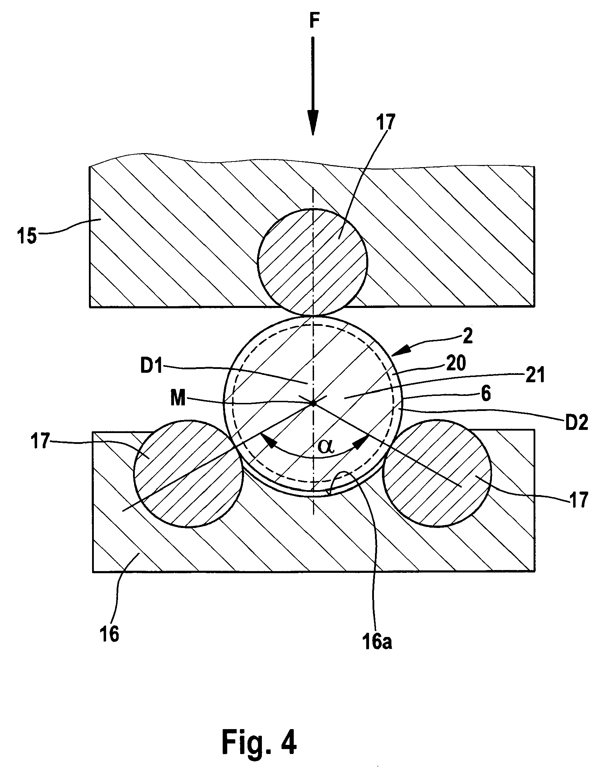

Die Welle 2 des Welle-Nabe-Bauteils 1 weist einen gehärteten Randbereich 20 und einen nicht gehärteten Innenbereich 21 auf. Die Welle ist dabei beispielsweise aus einem kaltgezogenen C45- oder C60-Rundstahl hergestellt, welcher dann randschichtgehärtet wurde. Wie aus Figur 4 ersichtlich ist, ist dabei eine Dicke D2 der gehärteten Randschicht im Vergleich zu einem Durchmesser D1 der Welle relativ klein. In diesem Ausführungsbeispiel ist ein Verhältnis der Dicke D2 zum Durchmesser D1 ca. 5 %. Die Welle ist ferner im Vergleich zum Durchmesser sehr lang. Dabei liegt die Oberflächenhärte der Randschicht etwa bei 240 bis 380 HV (Vickers Härte), was ca. 70 bis 80 HR 15 N (Rockwell Härte entspricht).

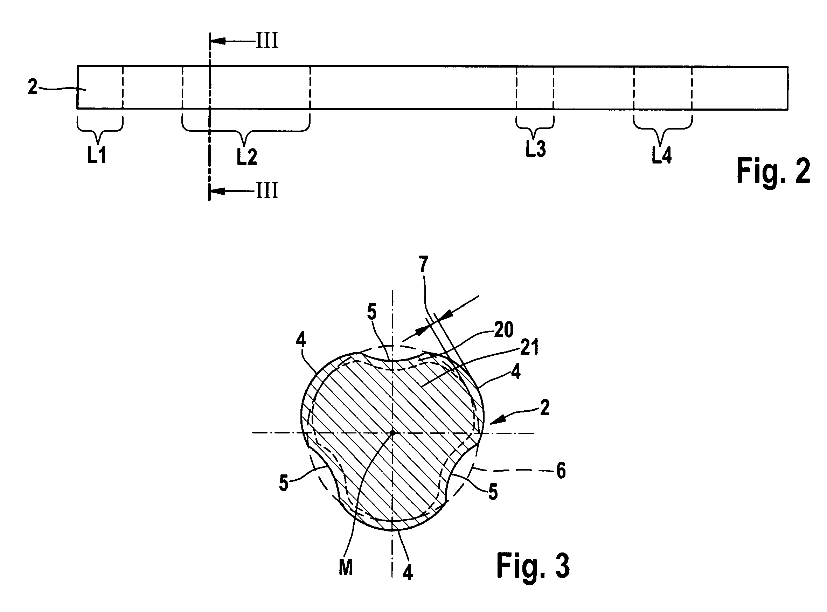

Wie aus Figur 2 ersichtlich ist, weist die Welle 2 vier umgeformte Teilbereiche L1, L2, L3 und L4 auf. Die umgeformten Teilbereiche L1, L2, L3 und L4 werden nach dem Randschichthärten der Welle hergestellt. Eine Länge der umgeformten Teilbereiche an der Welle 2 in Längsrichtung der Welle entspricht dabei einer jeweiligen Breite des zugehörigen Nabenbauteils. D.h., eine Breite des Lamellenpakets 3 ist beispielsweise gleich einer Axiallänge des zweiten umgeformten Teilbereichs L2. In gleicher Weise entsprechen die Axiallängen der Teilbereiche L1, L3 und L4 den Breiten des Lagerrings 10, des Abtriebszahnrads 12 und der Lagerhülse 11.

Figur 3 zeigt schematisch einen Schnitt durch die Welle 2 am umgeformten Teilbereich L2. Wie aus Figur 3 ersichtlich ist, ist die randschichtgehärtete Welle derart umgeformt, dass sie drei vorstehende Bereiche 4 und drei eingedrückte Bereiche 5 umfasst. Die vorstehenden bzw. eingedrückten Bereiche sind dabei jeweils um 120° entlang des Umfangs der Welle versetzt angeordnet. In Figur 3 ist mit einer gestrichelten Linie der ursprüngliche Außenumfang 6 eingezeichnet. Hierdurch ist ein Übermaß 7 des vorstehenden Bereichs 4 ersichtlich. Es sei angemerkt, dass die drei vorstehenden Bereiche sowie die drei eingedrückten Bereiche jeweils gleich ausgebildet sind. In diesem Ausführungsbeispiel entspricht das Übermaß 7 einer Dicke D2 des gehärteten Randbereichs. Es ist jedoch auch möglich, dass das Übermaß 7 größer oder kleiner als die Dicke D2 des gehärteten Randbereichs ist.

Figur 4 zeigt schematisch den Umformvorgang der Welle 2. Die Welle 2 wird nach dem Randschichthärten in eine Aufnahme 16a einer Matrize 16 gelegt. In der Matrize 16 sind zwei Hartmetallzylinder 17 angeordnet. Die Hartmetallzylinder 17 sind dabei derart angeordnet, dass bei einer eingelegten Welle 2 ein Mittelpunkt M der Welle 2 im Schnittpunkt zweier Linien durch die Mittelpunkte der beiden Zylinder 17 der Matrize 16 liegt, wobei zwischen den beiden Linien durch die Mittelpunkte der Zylinder 17 ein Winkel α von 120° gebildet ist. Ferner ist ein Stempel 15 mit einem weiteren Hartmetallzylinder 17 vorgesehen, welcher auf die eingelegte Welle 2 abgesenkt wird. Dies ist in Figur 4 durch den Pfeil F angedeutet. Eine gedachte Linie zwischen dem Mittelpunkt M der Welle 2 und dem Hartmetallzylinder 17 ist dabei parallel zur Richtung des Pfeils F. Durch das Absenken des Stempels 15 in Richtung der Matrize 16 werden die Umformvorgänge an der Welle 2 gleichzeitig vorgenommen. D.h., die eingedrückten Bereiche 5 und die vorstehenden Bereiche 4 an der Welle 2 werden gleichzeitig hergestellt. Eine Länge der Hartmetallzylinder 17 des Stempels 15 und der Matrize 16 entspricht dabei jeweils den Breiten der zu erzeugenden umgeformten Teilbereiche L1, L2, L3 und L4. Somit umfasst das Umformwerkzeug mehrere Hartmetallzylindereinsätze 17, so dass gleichzeitig die umgeformten Teilbereiche an der Welle hergestellt werden können. Dabei weist das Umformwerkzeug eine einfache Werkzeuggeometrie auf und der Umformvorgang der randschichtgehärteten Welle kann einfach durchgeführt werden. Nach dem Umformvorgang werden dann die Welle 2 und die vier Nabenbauteile miteinander gefügt, wobei jeweils an den vorstehenden Bereichen 4 ein Presssitz zwischen der Welle und jedem der Nabenbauteile vorhanden ist. Die Abmessungen der Presssitze ist dabei derart gewählt, dass die inneren Nabenbauteile problemlos über die äußeren Nabenbauteile geführt werden können. Für einen sicheren Presssitz sind dabei die Materialien der Nabenbauteile derart gewählt, dass sie weicher als die randschichtgehärtete Welle sind. Hierbei sollte möglichst eine hohe Härtedifferenz zwischen den beiden Fügepartnern vorhanden sind.

Da erfindungsgemäß die gesamte Welle 2 gehärtet werden kann und es nicht notwendig ist, Teilbereiche der Welle 2 zu härten, kann der Härtevorgang sehr schnell und kostengünstig durchgeführt werden. Auch können die Wellen für verschiedene elektrische Maschinen verwendet werden, bei denen die Nabenbauteile an anderen Positionen in Längsrichtung der Welle 2 angeordnet sind. Hierdurch können insbesondere auch die Kosten der Lagerhaltung für derartige Wellen 2 reduziert werden. Weiter kann auf eine individuelle Kennzeichnung der Wellen 2 bzw. das Kennzeichnen von gehärteten Bereichen der Welle 2 mittels Markierungen verzichtet werden. Ferner kann durch das Vorsehen von drei vorstehenden Bereichen 4 bzw. drei eingedrückten Bereichen 5 je Teilbereich der Welle eine automatische Zentrierung während des Fügevorgangs erreicht werden. Auch hierdurch kann ein sicherer Montagevorgang bei Reduzierung des Ausschussanteils erhalten werden. Das Welle-Nabe-Bauteil 1 des ersten Ausführungsbeispiels wird in elektrischen Maschinen, insbesondere in Gleichstrom-Kleinmotoren für Fahrzeuge verwendet. Insbesondere sind Einsatzgebiete, Scheibenwischermotoren, Fensterhebermotoren, Lüfterantriebe oder andere elektrische Kleinantriebe im Fahrzeug.

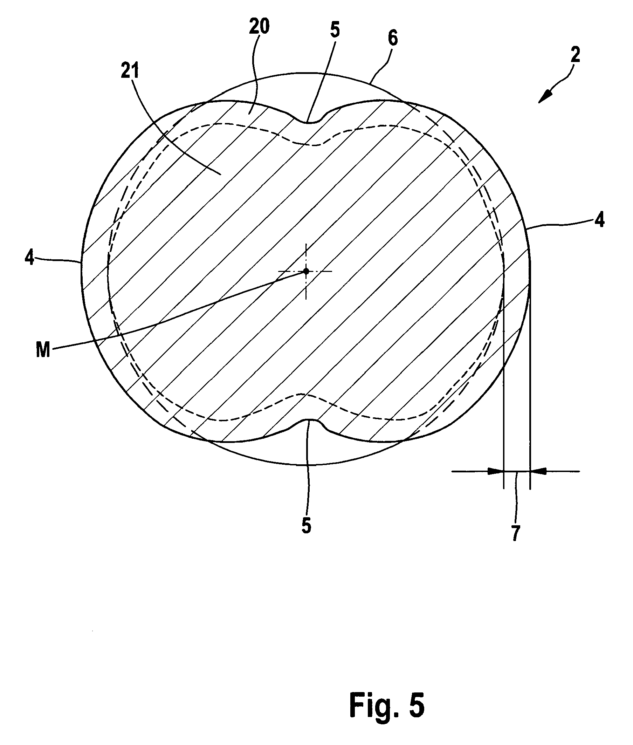

Figur 5 zeigt eine Welle 2 für ein Welle-Nabe-Bauteil gemäß einem zweiten Ausführungsbeispiel der Erfindung. Gleiche bzw. funktional gleiche Teile sind mit den gleichen Bezugszeichen wie im ersten Ausführungsbeispiel bezeichnet.

Wie aus Figur 5 ersichtlich ist, umfasst die Welle 2 des zweiten Ausführungsbeispiels genau zwei vorstehende Bereiche 4 und zwei eingedrückte Bereiche 5. Die vorstehenden Bereiche 4 und die eingedrückten Bereiche 5 sind dabei jeweils einander gegenüberliegend angeordnet. Zur Herstellung einer derartigen Welle 2 kann insbesondere ein Umformwerkzeug sehr einfach aufgebaut sein. Insbesondere die notwendigen Kräfte für den Umformvorgang der randschichtgehärteten Welle 2 können dabei reduziert werden, bzw. können damit voll durchgehärtete Wellen mit großer Härtedifferenz umgeformt werden. Der umgeformte Teilbereich ist dabei symmetrisch umgeformt. Ansonsten entspricht dieses Ausführungsbeispiel dem ersten Ausführungsbeispiel, so dass auf die dort gegebene Beschreibung verwiesen werden kann. Zu den vorhergehend beschriebenen Ausführungsbeispielen sei angemerkt, dass anstelle der zylinderförmigen Umformwerkzeuge auch Kugeln bzw. kugelabschnittsförmige Werkzeuge verwendet werden können, um die vorstehenden bzw. eingedrückten Bereiche an der Welle zu erzeugen.

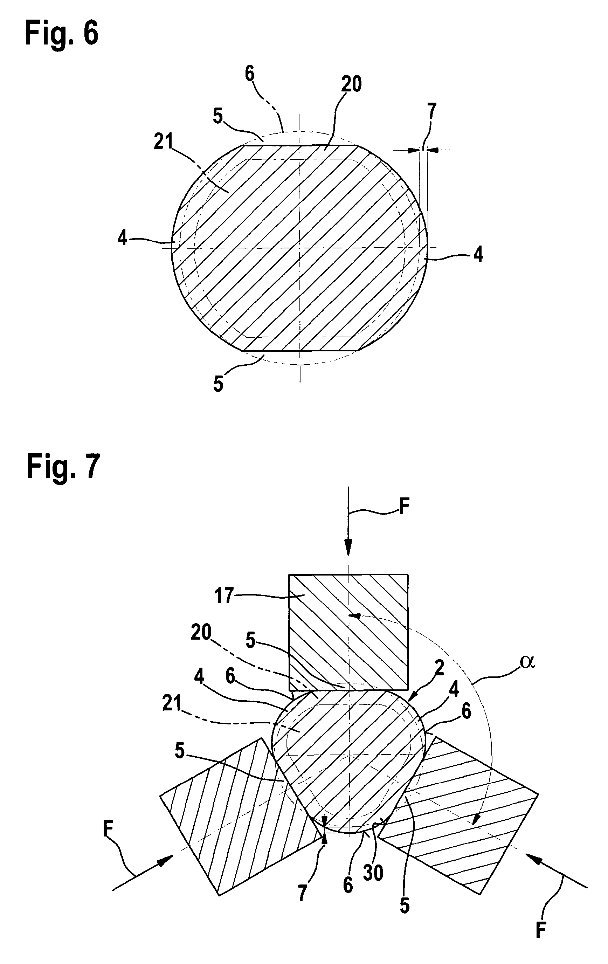

Figur 6 zeigt ebenfalls schematisch einen Schnitt durch die Welle am umgeformten Teilbereich L2 in einem weiteren Ausführungsbeispiel. Im Gegensatz zu Figur 3 ist die gehärtete Welle 2 derart umgeformt, dass sie nur zwei vorstehende Bereiche 4 und nur zwei eingedrückte Bereiche 5 umfasst. Dabei ist an der Welle 2 mittels Stempeln 15 mit glatten, ebenen Stempelflächen 30 ein radial vorstehender Bereich 4 ausgeformt worden. Dabei kann beispielsweise auch eine voll durchgehärtete Welle 2 verwendet werden. Gleiche bzw. funktional gleiche Teile sind mit den gleichen Bezugszeichen wie im ersten Ausführungsbeispiel bezeichnet.

Figur 7 zeigt schematisch den Umformvorgang der Welle 2. Die Welle 2 wird nach dem Härten in ein Werkzeug mit drei synchron betätigten Hartmetallstempeln 15 eingelegt. Die Stempel 15 bilden einen Winkel α von 120° zueinander. Sie weisen eine ebene Stempelfläche 30 auf, die radial gegen die Mantelfläche 6 der Welle 2 gepresst wird. Durch das synchrone Zustellen der Stempel 15 werden die Umformvorgänge an der Welle 2 gleichzeitig vorgenommen. D.h. die eingedrückten Bereiche 5 und die vorstehenden Bereiche 4 werden gleichzeitig hergestellt. Dies ist in der Figur 7 durch die Pfeile F angedeutet. Die axiale Länge der Stempel 15 kann dabei der Länge des Nabenbauteils 3, 10, 11, 12 entsprechen. Nach dem Umformvorgang werden dann die Welle 2 und das Nabenbauteil 3, 10, 11, 12 miteinander gefügt. Für einen sicheren Fügeprozess ohne Fresser ist die große Härtedifferenz zwischen der gehärteten Welle 2 und des weicheren Nabenbauteils 3, 10, 11, 12 sehr vorteilhaft.

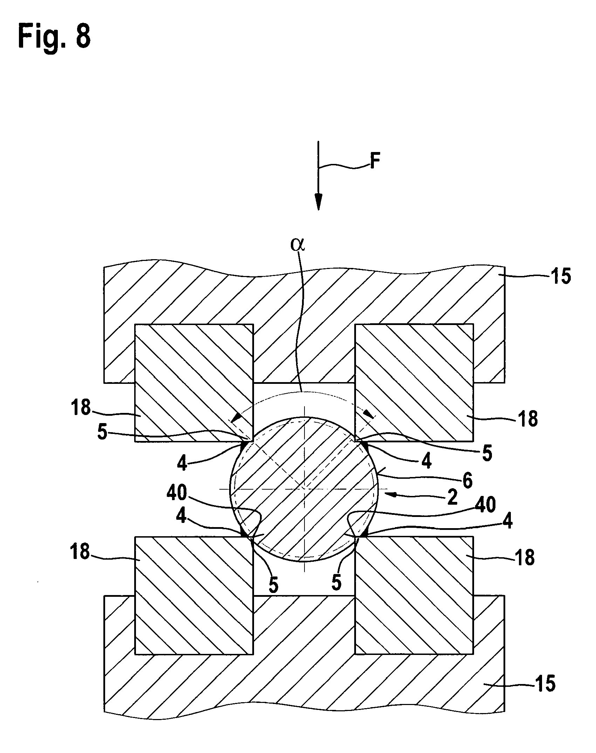

Weiter zeigt Figur 8 schematisch den Umformvorgang der randschichtgehärteten Welle 2 in einem weiteren Ausführungsbeispiel. Die randsichtgehärtete Welle 2 wird auf zwei Kerbleisten 18 aufgelegt. Dann werden zwei weitere Kerbleisten 18 gleichzeitig auf die Welle 2 abgesenkt. Dies ist in der Figur 8 durch die Pfeile F angedeutet. Durch das Eindringen der Kerbleistenkanten 40 werden gleichzeitig eingedrückte Bereiche 5 und vorstehende Bereiche 4 hergestellt. Die vier Kerbleisten 18 bilden einen Winkel α von ca. 90° zueinander. Die Länge der Kerbleisten 18 kann dabei der Länge des Nabenbauteils 3, 10, 11, 12 entsprechen, kann jedoch auch kürzer oder länger als die Länge des Nabenbauteils 3, 10, 11, 12 ausgebildet sein. Um die Standzeit der Kerbleistenkante 40 zu erhöhen, wird hierbei die Welle 2 vorzugsweise ausschließlich in einer dünnen, äußeren Randschicht gehärtet, die vorzugsweise 0,1 bis 1,5 mm - beispielsweise ungefähr 0,7 mm - tief ausgebildet ist. Dabei ist die Oberflächenhärte geringer, als bei einer voll durchgehärteten Welle 2. Die Form der Kerbleistenkante 40 ist vorzugsweise derart ausgebildet, dass das Wellenmaterial beim Einpressen des Stempelwerkzeugs nicht ungehindert fließen kann, sondern entlang einer Flanke der Kante verfestigt und verpresst wird, so dass eine vorab klar definierte Geometrie der radial vorstehenden Bereichs 4 entsteht, Dieser Bereich 4 hat dann durch die Materialverdichtung zusätzlich zum Randschichthärten eine erhöhte Festigkeit. Die Spitze der Kerbleistenkante 40 - die insbesondere auch rund oder oval ausgebildet sein kann - ist asymmetrisch zur Stempelanpressrichtung ausgebildet, so dass sich im wesentlichen nur auf einer Seite in Umfangsrichtung ein Materialaufwurf als radial vorstehender Bereich 4 bildet. Nach dem Umformvorgang werden die randschichtgehärtete Welle 2 und das Nabenbauteil 3, 10, 11, 12 miteinander gefügt.

## Patentansprüche

1. Verfahren zum Herstellen eines Welle-Nabe-Bauteils (1) mit einer Welle (2), einem Nabenbauteil (3;10;11; 12) und einer Welle-Nabe-Verbindung für einen Anker einer elektrischen Maschine, umfassend die Schritte:
- Härten einer Welle (2), an deren Randschicht (20) am Außenmantel (6) der Welle (2),
- Umformen der gehärteten Welle (2) derart, dass ein Teilbereich (L1; L2; L3; L4) der Welle (2) derart umgeformt wird, dass wenigstens ein radial vorstehender Bereich (4) und ein radial eingedrückter Bereich (5) erzeugt wird, und
- Fügen der umgeformten Welle (2) und des Nabenbauteils (3, 10, 11, 12) zum Welle-Nabe-Bauteil, sodass an dem vorstehenden Bereich (4) die Welle-Nabe-Verbindung einen Presssitz aufweist, wobei eine Härte des Nabenbauteils (3; 10; 11; 12) geringer als eine Randschichthärte der Welle (2) ist, **dadurch gekennzeichnet, dass** eine Dicke (D2) des gehärteten Randschichtbereichs (20) der Welle (2) zwischen 0,01 mm und 4 mm, insbesondere zwischen 0,2 mm und 1 mm, beträgt.

2. Verfahren nach Anspruch 1, **dadurch gekennzeichnet, dass** der umgeformte Teilbereich (L1; L2; L3; L4) der Welle (2) eine Länge in Axialrichtung der Welle (2) aufweist, welche einer axialen Länge des Nabenbauteils (3; 10; 11; 12) entspricht, oder kürzer ist.

3. Verfahren nach einem der vorhergehenden Ansprüche, **dadurch gekennzeichnet, dass** der Schritt des Umformens der Welle (2) mittels eines Zylinderabschnitts (17) oder mittels ebenflächigen Stempeln (30) erfolgt.

4. Verfahren nach einem der vorhergehenden Ansprüche, **dadurch gekennzeichnet, dass** der Schritt des Umformens der Welle (2) mittels einer Kerbleiste (18) mit einer länglichen Spitze (40) erfolgt.

5. Verfahren nach einem der vorhergehenden Ansprüche, **dadurch gekennzeichnet, dass** mehrere umgeformte Teilbereiche an der Welle (2) synchron oder nacheinander gebildet werden.

6. Verfahren nach einem der vorhergehenden Ansprüche, **dadurch gekennzeichnet, dass** das Umformen eines Teilbereichs der Welle (2) an genau zwei einander gegenüberliegenden Positionen der Welle (2) ausgeführt wird.

7. Verfahren nach einem der vorhergehenden Ansprüche, **dadurch gekennzeichnet, dass** das Umformen an einem Teilbereich der Welle (2) an genau drei Positionen der Welle (2) ausgeführt wird, wobei die drei Positionen jeweils in einem Winkel von 120° am Umfang der Welle (2) angeordnet sind.

8. Verfahren nach einem der vorhergehenden Ansprüche, **dadurch gekennzeichnet, dass** das Umformen an einem Teilbereich der Welle (2) an genau vier Positionen der Welle (2) ausgeführt wird, wobei die vier Positionen jeweils in einem Winkel von 90° am Umfang der Welle (2) angeordnet sind.

9. Verfahren nach einem der vorhergehenden Ansprüche, **dadurch gekennzeichnet, dass** ein Durchmesser (D1) der Welle (2) zwischen 4 mm und 10 mm beträgt.

10. Verfahren nach einem der vorhergehenden Ansprüche, **dadurch gekennzeichnet, dass** die Härte am Außenmantel (6) der Welle (2) im Bereich von 200 bis 500 HV, insbesondere zwischen 240 bis 380 HV (Härte nach Vickers) liegt.

11. Welle-Nabe-Bauteil für einen Anker einer elektrischen Maschine, umfassend eine Welle (2) und ein Nabenbauteil (3; 10; 11; 12), wobei die Welle (2) zumindest eine gehärtete Randschicht (20) am Außenumfangsmantel (6) der Welle (2) aufweist, und die Welle (2) wenigstens einen - nach dem Härten erzeugten - umgeformten Teilbereich (L1; L2; L3; L4) aufweist, welcher eine Umformung mit einem über einen ursprünglichen Außenumfang (6) der Welle (2) radial vorstehenden Bereich (4) und einen radial eingedrückten Bereich (5) aufweist, und eine Verbindung zwischen der Welle (2) und dem Nabenbauteil (3; 10; 11; 12) ein Presssitz am radial vor-stehenden Bereich (4) ist, wobei eine Härte des Nabenbauteils (3; 10; 11; 12) geringer ist als eine Härte der Welle (2) - insbesondere eine Härte deren Randschicht (20), **dadurch gekennzeichnet, dass** eine Dicke (D2) des gehärteten Randschichtbereichs (20) der Welle (2) zwischen 0,01 mm und 4 mm, insbesondere zwischen 0,2 mm und 1 mm, beträgt.

12. Bauteil nach Anspruch 11, **dadurch gekennzeichnet, dass** das Nabenbauteils (3, 10, 11,12) als Blechpaket (3) aus einer Vielzahl von Einzelblechen (3a), oder als ein Stanzpaket, oder als ein Lagerring (10), oder als ein Ringmagnet, oder als eine Lagerhülse (11), oder als ein Abtriebszahnrad (12), oder als ein Kommutator, oder als eine Getriebeschnecke, oder als ein Mitnehmer ausgebildet ist.

13. Bauteil nach Anspruch 11 oder 12, **dadurch gekennzeichnet, dass** ein umgeformter Teilbereich (L1; L2; L3; L4) der Welle (2) genau drei vorstehende Bereiche (4) und genau drei eingedrückte Bereiche (5) umfasst.

14. Bauteil nach Anspruch 11 bis 13, **dadurch gekennzeichnet, dass** ein umgeformter Teilbereich (L1; L2; L3; L4) der Welle (2) genau vier vorstehende Bereiche (4) und genau vier eingedrückte Bereiche (5) umfasst.

15. Bauteil nach einem der Ansprüche 11 bis 14, **dadurch gekennzeichnet, dass** das Bauteil eine Vielzahl von Nabenbauteilen (3; 10; 11; 12) an der Welle (2) umfasst.

## Claims

1. Method for producing a shaft-hub component (1) having a shaft (2), a hub component (3; 10; 11; 12) and a shaft-hub connection for an armature of an electrical machine, comprising the steps of:
- hardening a shaft (2) at the outer layer (20) thereof on the outer shell (6) of the shaft (2),
- shaping the hardened shaft (2) in such a way that a subregion (L1; L2; L3; L4) of the shaft (2) is shaped in such a way that at least a radially projecting region (4) and a radially indented region (5) are produced, and
- joining the shaped shaft (2) and the hub component (3, 10, 11, 12) to form the shaft-hub component, such that the shaft-hub connection has a press fit on the projecting region (4), a hardness of the hub component (3; 10; 11; 12) being less than an outer layer hardness of the shaft (2), **characterized in that** a thickness (D2) of the hardened outer layer region (20) of the shaft (2) is between 0.01 mm and 4 mm, in particular between 0.2 mm and 1 mm.

2. Method according to Claim 1, **characterized in that** the shaped subregion (L1; L2; L3; L4) of the shaft (2) has a length in the axial direction of the shaft (2) that corresponds to an axial length of the hub component (3; 10; 11; 12), or is shorter.

3. Method according to one of the preceding claims, **characterized in that** the step of shaping the shaft (2) is performed by means of a cylindrical portion (17) or by means of planar punches (30).

4. Method according to one of the preceding claims, **characterized in that** the step of shaping the shaft (2) is performed by means of a notching bar (18) with an elongated tip (40).

5. Method according to one of the preceding claims, **characterized in that** a number of shaped subregions are formed on the shaft (2) synchronously or one after the other.

6. Method according to one of the preceding claims, **characterized in that** the shaping of a subregion of the shaft (2) is carried out at precisely two positions of the shaft (2) lying opposite each other.

7. Method according to one of the preceding claims, **characterized in that** the shaping on a subregion of the shaft (2) is carried out at precisely three positions of the shaft (2), the three positions being respectively arranged at an angle of 120° on the circumference of the shaft (2).

8. Method according to one of the preceding claims, **characterized in that** the shaping on a subregion of the shaft (2) is carried out at precisely four positions of the shaft (2), the four positions being respectively arranged at an angle of 90° on the circumference of the shaft (2).

9. Method according to one of the preceding claims, **characterized in that** a diameter (D1) of the shaft (2) is between 4 mm and 10 mm.

10. Method according to one of the preceding claims, **characterized in that** the hardness on the outer shell (6) of the shaft (2) lies in the range from 200 to 500 HV, in particular between 240 and 380 HV (Vickers hardness).

11. Shaft-hub component for an armature of an electrical machine, comprising a shaft (2) and a hub component (3; 10; 11; 12), the shaft (2) having at least one hardened outer layer (20) on the outer circumferential shell (6) of the shaft (2), and the shaft (2) having at least one shaped subregion (L1; L2; L3; L4) - produced after the hardening - which has a shaping with a region (4) projecting radially beyond an original outer circumference (6) of the shaft (2) and a radially indented region (5), and a connection between the shaft (2) and the hub component (3; 10; 11; 12) being a press fit on the radially projecting region (4), a hardness of the hub component (3; 10; 11; 12) being less than a hardness of the shaft (2) - in particular a hardness of the outer layer (20) thereof - **characterized in that** a thickness (D2) of the hardened outer layer region (20) of the shaft (2) is between 0.01 mm and 4 mm, in particular between 0.2 mm and 1 mm.

12. Component according to Claim 11, **characterized in that** the hub component (3, 10, 11, 12) is formed as a stack of sheets (3) comprising a multiplicity of individual metal sheets (3a), or as a stack of stamped sheets, or as a bearing ring (10), or as an annular magnet, or as a bearing sleeve (11), or as a driven gear wheel (12), or as a commutator, or as a worm gear, or as a driving dog.

13. Component according to Claim 11 or 12, **characterized in that** a shaped subregion (L1; L2; L3; L4) of the shaft (2) comprises precisely three projecting regions (4) and precisely three indented regions (5).

14. Component according to Claims 11 to 13, **characterized in that** a shaped subregion (L1; L2; L3; L4) of the shaft (2) comprises precisely four projecting regions (4) and precisely four indented regions (5).

15. Component according to one of Claims 11 to 14, **characterized in that** the component comprises a multiplicity of hub components (3; 10; 11; 12) on the shaft (2).

## Revendications

1. Procédé de fabrication d'un composant arbre-moyeu (1) comprenant un arbre (2), un composant moyeu (3 ; 10 ; 11 ; 12) et une liaison arbre-moyeu pour un induit d'une machine électrique, comprenant les étapes suivantes :
- trempe d'un arbre (2), sur sa couche de bordure (20) sur l'enveloppe extérieure (6) de l'arbre (2),
- façonnage de l'arbre trempé (2) de telle sorte qu'une zone partielle (L1 ; L2 ; L3 ; L4) de l'arbre (2) est façonnée de manière à produire au moins une zone faisant saillie dans le sens radial (4) et une zone enfoncée dans le sens radial (5), et
- assemblage de l'arbre façonné (2) et du composant moyeu (3, 10, 11, 12) en un composant arbre-moyeu, de sorte que la liaison arbre-moyeu présente au niveau de la zone en saillie (4) un ajustement serré, une dureté du composant moyeu (3 ; 10 ; 11 ; 12) étant inférieure à une dureté de la couche de bordure de l'arbre (2), **caractérisé en ce qu'**une épaisseur (D2) de la zone de couche de bordure (20) trempée de l'arbre (2) est comprise entre 0,01 mm et 4 mm, notamment entre 0,2 mm et 1 mm.

2. Procédé selon la revendication 1, **caractérisé en ce que** la zone partielle (L1 ; L2 ; L3 ; L4) façonnée de l'arbre (2) présente une longueur dans le sens axial de l'arbre (2), laquelle correspond à une longueur axiale du composant moyeu (3 ; 10 ; 11 ; 12) ou est plus courte.

3. Procédé selon l'une des revendications précédentes, **caractérisé en ce que** l'étape de façonnage de l'arbre (2) est réalisée au moyen d'une section cylindrique (17) ou au moyen d'un poinçonnage à surface plane (30).

4. Procédé selon l'une des revendications précédentes, **caractérisé en ce que** l'étape de façonnage de l'arbre (2) est réalisée au moyen d'un lardon (18) muni d'une pointe allongée (40).

5. Procédé selon l'une des revendications précédentes, **caractérisé en ce que** plusieurs zones partielles façonnées sont formées sur l'arbre (2) de manière synchrone ou les unes après les autres.

6. Procédé selon l'une des revendications précédentes, **caractérisé en ce que** le façonnage d'une zone partielle de l'arbre (2) est réalisé en exactement deux positions opposées l'une à l'autre de l'arbre (2).

7. Procédé selon l'une des revendications précédentes, **caractérisé en ce que** le façonnage en une zone partielle de l'arbre (2) est réalisé en exactement trois positions de l'arbre (2), les trois positions étant respectivement disposées à un angle de 120° sur le pourtour de l'arbre (2).

8. Procédé selon l'une des revendications précédentes, **caractérisé en ce que** le façonnage en une zone partielle de l'arbre (2) est réalisé en exactement quatre positions de l'arbre (2), les quatre positions étant respectivement disposées à un angle de 90° sur le pourtour de l'arbre (2).

9. Procédé selon l'une des revendications précédentes, **caractérisé en ce qu'**un diamètre (D1) de l'arbre (2) est compris entre 4 mm et 10 mm.

10. Procédé selon l'une des revendications précédentes, **caractérisé en ce que** la dureté sur l'enveloppe extérieure (6) de l'arbre (2) est comprise dans la plage de 200 à 500 HV, notamment entre 240 et 380 HV (dureté selon Vickers).

11. Composant arbre-moyeu pour un induit d'une machine électrique, comprenant un arbre (2) et un composant moyeu (3 ; 10 ; 11 ; 12), l'arbre (2) présentant au moins une couche de bordure (20) trempée sur l'enveloppe de pourtour extérieure (6) de l'arbre (2), et l'arbre présentant au moins une zone partielle (L1 ; L2 ; L3 ; L4) façonnée, produites après la trempe, laquelle présente un façonnage comprenant une zone faisant saillie dans le sens radial (4) au-dessus d'un pourtour extérieur (6) originel de l'arbre (2) et une zone enfoncée dans le sens radial (5) , et un assemblage entre l'arbre (2) et le composant moyeu (3 ; 10 ; 11 ; 12) étant un ajustement serré au niveau de la zone faisant saillie dans le sens radial (4), une dureté du composant moyeu (3 ; 10 ; 11 ; 12) étant inférieure à une dureté de l'arbre (2) notamment à une dureté de la couche de bordure de l'arbre (2), **caractérisé en ce qu'**une épaisseur (D2) de la zone de couche de bordure (20) trempée de l'arbre (2) est comprise entre 0,01 mm et 4 mm, notamment entre 0,2 mm et 1 mm.

12. Composant selon la revendication 11, **caractérisé en ce que** le composant moyeu (3, 10, 11, 12) est réalisé sous la forme d'un empilage de tôles (3) constitué d'une pluralité de tôles individuelles (3a), ou sous la forme d'un bloc découpé au poinçon, ou sous la forme d'une bague d'appui (10), ou sous la forme d'un aimant annulaire, ou sous la forme d'une douille de palier (11), ou sous la forme d'une roue dentée de sortie (12), ou sous la forme d'un collecteur, ou sous la forme d'une vis sans fin d'engrenage, ou sous la forme d'un élément d'entraînement.

13. Composant selon la revendication 11 ou 12, **caractérisé en ce qu'**une zone partielle (L1 ; L2 ; L3 ; L4) façonnée de l'arbre (2) comprend exactement trois zones faisant saillie (4) et exactement trois zones enfoncées (5).

14. Composant selon la revendication 11 ou 12, **caractérisé en ce qu'**une zone partielle (L1 ; L2 ; L3 ; L4) façonnée de l'arbre (2) comprend exactement quatre zones faisant saillie (4) et exactement quatre zones enfoncées (5).

15. Composant selon l'une des revendications 11 à 14, **caractérisé en ce que** le composant comprend une pluralité de composants moyeux (3 ; 10 ; 11 ; 12) sur l'arbre (2).
